# EUROPÄISCHE PATENTSCHRIFT

(11) **EP 1 886 763 B1**
(45) Veröffentlichungstag und Bekanntmachung des Hinweises auf die Patenterteilung: **07.03.2012**
(21) Anmeldenummer: 07014299.7
(22) Anmeldetag: 20.07.2007
(51) Int. Cl.: B23Q 3/157, B23Q 3/155

(54) **Werkzeugmagazin für eine Werkzeugmaschine**
Tool magazine for a machine tool
Magasin d'outils pour machine-outil

(30) Priorität: 09.08.2006 DE 102006037435
(43) Veröffentlichungstag der Anmeldung: 13.02.2008
(73) Patentinhaber: Haas Schleifmaschinen GmbH, 78647 Trossingen (DE)
(72) Erfinder: Braun, Hans-Dieter, 78665 Frittlingen (DE)
(74) Vertreter: Patentanwälte Westphal, Mussgnug & Partner

(56) Entgegenhaltungen:
- EP-A- 1 364 742
- DE-A1- 19 708 096
- US-A- 3 817 391
- US-A- 3 867 756

## Beschreibung

Die Erfindung betrifft ein Werkzeugmagazin für eine Werkzeugmaschine gemäß dem Oberbegriff des Anspruchs 1 (siehe, z.B. US-3,817,391).

Bei Werkzeugmaschinen zur Bearbeitung von Werkstücken, z. B. zum Schleifen, Fräsen, Bohren, Reiben, Drehen, Polieren und Gewindeschneiden werden häufig Werkzeugmagazine verwendet, die mehrere Werkzeuge aufnehmen können. Insbesondere wenn ein Werkstück in aufeinanderfolgenden Bearbeitungsschritten mit unterschiedlichen Werkzeugen bearbeitet wird, ist es wichtig, dass die in dem Werkzeugmagazin zur Verfügung gehaltenen Werkzeuge schnell in die Werkzeugspindel der Werkzeugmaschine eingewechselt werden können. Dabei sind unterschiedliche Systeme bekannt, um die Werkzeuge zwischen dem Werkzeugmagazin und der Werkzeugspindel zu wechseln. Bei dem sogenannten Pick-up-System werden die Werkzeugspindel und das Werkzeugmagazin gegeneinander verfahren, um die Werkzeugspindel und das Werkzeugmagazin in eine Wechselposition zu bringen, in welcher die Werkzeugspindel das Werkzeug in das Werkzeugmagazin ablegen oder ein Werkzeug aus dem Werkzeugmagazin entnehmen kann. Ein solches System ist beispielsweise in der DE 198 44 242 C2 gezeigt.

Bei einem anderen System ist eine Wechseleinrichtung, üblicherweise ein Greiferarm zwischen das Werkzeugmagazin und die Werkzeugspindel geschaltet, um die Werkzeuge zu übergeben. Ein solches System ist beispielsweise in der DE 37 31 280 C2 gezeigt.

Bei den bekannten Werkzeugmagazinen sind jeweils Werkzeughalter vorgesehen, in welchen die Werkzeuge aufgenommen werden. Die Werkzeughalter sind in dem Werkzeugmagazin in einer linearen oder kreisförmigen Reihe aufeinanderfolgend angeordnet, so dass durch eine entsprechende gesteuerte Bewegung des Werkzeugmagazins jeweils ein ausgewählter Werkzeughalter in die Wechselposition gebracht werden kann, um ein zuvor verwendetes Werkzeug in diesem Werkzeughalter abzulegen oder ein in diesem Werkzeughalter bereitgestelltes Werkzeug zu entnehmen. Die Werkzeughalter sind dabei in dem Werkzeugmagazin in festen Positionen und in festem gegenseitigem Abstand in der Reihe angeordnet. Dieser gegenseitige Abstand ist dadurch vorgegeben, dass in den aufeinanderfolgenden benachbarten Werkzeughaltern die Werkzeuge mit dem größten vorkommenden Durchmesser aufgenommen werden können, ohne sich gegenseitig zu behindern. Dadurch ergibt sich mit zunehmender Anzahl von Speicherplätzen in dem Werkzeugmagazin ein stark wachsender Platzbedarf.

Aus der DE 197 08 096 A1 ist ein Werkzeugmagazin für eine Werkzeugmaschine bekannt, bei welcher Werkzeughalter in einer Reihe in Umfangsrichtung auf einem Magazinrad angeordnet sind. In den Werkzeughaltern werden Werkzeuge aufgenommen, wobei die Werkzeugachsen zu der Reihe der Werkzeughalter und zu der Achse des Magazinrades im Wesentlichen senkrecht angeordnet sind. Die Werkzeugspindel ist radial gegen das Werkzeugmagazin verfahrbar. Die Werkzeughalter sind in fest vorgegebenen Winkelpositionen in das Magazinrad eingesetzt. Diese Winkelpositionen können in unterschiedlichen Umfangsbereichen unterschiedliche Winkelabstände aufweisen, sodass die Werkzeughalter in den verschiedenen Umfangsbereichen des Magazinrades Werkzeuge mit unterschiedlichem Durchmesser aufnehmen können. Damit kann zwar der Platzbedarf in dem Werkzeugmagazin reduziert werden, das Werkzeugmagazin verliert jedoch an Flexibilität bezüglich der zu speichernden Werkzeuge.

Aus der US 3 817 391 ist ein Werkzeugmagazin für eine Werkzeugmaschine bekannt, bei welchem auf eine umlaufende Kette Werkzeughalter aufgesetzt werden. Die Werkzeughalter nehmen Werkzeuge mit zu der Umlaufebene der Kette senkrechter Werkzeugachse auswechselbar auf. Die Werkzeughalter können in dem durch die Kettenglieder vorgegebenen Rasterabstand in die Kette eingesetzt werden. Dadurch ist es möglich, den Abstand der in der Reihe aufeinanderfolgenden Werkzeughalter zu variieren und dem Durchmesser der in den Werkzeughaltern aufgenommenen Werkzeuge anzupassen. Dadurch wird eine bessere Ausnutzung der Kapazität des Werkzeugmagazins ermöglicht. Da eine Variation des Abstandes der Werkzeughalter jedoch nur im Rastenmaß der Kettenglieder möglich ist, verbleibt in der Regel ein ungenutzter Zwischenraum zwischen den aufeinanderfolgenden Werkzeugen in dem Werkzeugmagazin.

Der Erfindung liegt die Aufgabe zugrunde, ein Werkzeugmagazin zu schaffen, bei welchem die Aufnahmekapazität für Werkzeuge vergrößert werden kann, ohne dass der Platzbedarf für das Werkzeugmagazin entsprechend stark anwächst.

Diese Aufgabe wird erfindungsgemäß gelöst durch ein Werkzeugmagazin mit den Merkmalen des Patentanspruchs 1.

Vorteilhafte Ausführungen der Erfindung sind in den Unteransprüchen angegeben.

Erfindungsgemäß sind die Werkzeughalter in dem Werkzeugmagazin nicht fest angeordnet. Sie können vielmehr in ihrer Position in der Reihe in dem Werkzeugmagazin verstellt werden, wodurch der Abstand der in der Reihe aufeinanderfolgenden Werkzeughalter variiert werden kann. Die Werkzeughalter können damit dem jeweiligen Verwendungsfall entsprechend in ihrem Abstand so eingestellt werden, dass sie nur den Mindestabstand aufweisen, der den Durchmessern der in den aufeinanderfolgenden Werkzeughaltern jeweils tatsächlich abgelegten Werkzeugen entspricht.

In der jeweiligen eingestellten Position werden die Werkzeughalter dann für den Betrieb der Werkzeugmaschine fixiert.

In einer konstruktiv einfachen Ausführung ist in dem starren Körper des Werkzeugmagazins eine in Richtung der Reihe der Werkzeughalter verlaufende T-Nut vorgesehen, in welche die Werkzeughalter eingreifen, so dass sie in dieser T-Nut verschiebbar sind und in dieser T-Nut zur Fixierung geklemmt werden können.

In einer bevorzugten Ausführung ist das Werkzeugmagazin als kreisförmiges Magazinrad ausgebildet, welches um seine zentrische Achse drehbar angetrieben wird. Die Werkzeughalter sind an dem Umfang des Magazinrades angeordnet. Vorzugsweise sind die Werkzeughalter dabei so angeordnet, dass sie die Werkzeuge mit in Bezug auf das Magazinrad radial angeordneter Werkzeugachse aufnehmen. In vielen Fällen ist der Durchmesser des eigentlichen Werkzeugs größer als der Durchmesser seines Spannschaftes. Daher werden die Werkzeuge vorzugsweise so in den Werkzeughaltern aufgenommen, dass ihr Schaft radial nach innen in das Magazinrad gerichtet ist.

Bei einer solchen Ausbildung des Werkzeugmagazins mit kreisförmigem Magazinrad und nach innen orientierten Werkzeugschäften kann ein Pick-up-System dadurch realisiert werden, dass die Werkzeugspindel in das Innere des Magazinrades eintaucht und radial gegen die Werkzeughalter mit den aufgenommenen Werkzeugen gefahren wird. Wird das Magazinrad mit vertikaler Achse in der Werkzeugmaschine angeordnet, so ergibt sich eine besonders günstige Ausführung, wenn die Werkzeughalter am Umfang des Magazinrades so angeordnet sind, dass sie eine sich nach oben öffnende Aufnahme aufweisen, in welche das jeweilige Werkzeug eingelegt wird. Das Werkzeug kann mit seiner Greifrille von oben in die Aufnahme des Werkzeughalters eingelegt werden bzw. aus der Aufnahme nach oben herausgehoben werden. Ohne zusätzliche Klemm- und Haltemaßnahmen wird das Werkzeug dabei durch sein Eigengewicht in der Aufnahme gehalten und durch die in die Greifrille eingreifende Aufnahme gegen eine axiale Verschiebung und ein Verkippen gesichert.

Ist die Werkzeugmaschine beispielsweise als Universalschleifmaschine ausgebildet, so werden als Werkzeuge Schleifwerkzeuge und gegebenenfalls Bohrer oder Fräser zur Verfügung gehalten. Die Schleifscheiben weisen in der Regel einen großen Durchmesser auf, während Bohrer einen minimalen Durchmesser aufweisen. Bei herkömmlichen Magazinen muss sich der Abstand der Werkzeughalter daher nach dem maximalen Durchmesser der gespeicherten Schleifscheiben richten. Erfindungsgemäß können dagegen die Werkzeughalter die Bohrer, Fräser oder sonstige Werkzeuge mit geringem Durchmesser aufnehmen, dichter aneinander anschließend angeordnet werden. Die Anzahl der in dem Werkzeugmagazin gespeicherten Werkzeuge kann somit erfindungsgemäß gegenüber einem Magazin mit gleichen Abmessungen auf das Zweifache oder mehr gesteigert werden.

Nach dem Einstellen und Fixieren der Werkzeughalter wird die jeweilige fixierte Position der Werkzeughalter mit den zugehörigen Werkzeugen in der Steuerung der Werkzeugmaschine abgelegt, so dass die einzelnen Magazinplätze des Werkzeugmagazins entsprechend dieser gespeicherten Werkzeugpositionen gesteuert angefahren werden können.

Im Folgenden wird die Erfindung anhand eines in der Zeichnung dargestellten Ausführungsbeispieles näher erläutert. Es zeigen
- Fig. 1: eine Werkzeugmaschine in perspektivischer Ansicht in der Arbeitsstellung,
- Fig. 2: dieselbe Ansicht der Werkzeugmaschine ohne Werkzeugspindel in der Arbeitsstellung,
- Fig. 3: dieselbe Darstellung der Werkzeugmaschine ohne Werkzeugspindel in der Wechselposition eines äußeren Magazinrades,
- Fig. 4: dieselbe Darstellung der Werkzeugmaschine in der Wechselposition des äußeren Magazinrades und der Werkzeugspindel,
- Fig. 5: dieselbe Darstellung der Werkzeugmaschine mit der Werkzeugspindel und einem inneren Magazinrad in der Wechselposition,
- Fig. 6: dieselbe Darstellung der Werkzeugmaschine mit der Werkzeugspindel, einem Schleifwerkzeug des äußeren Magazinrades und einem Schleifscheibenschutz des inneren Magazinrades in der Wechselposition,
- Fig. 7: in perspektivischer Detaildarstellung die Werkzeugspindel und das äußere Magazinrad,
- Fig. 8-10: in einer Seitenansicht die Abgabe eines Werkzeuges von der Werkzeugspindel in das äußere Magazinrad,
- Fig. 11: in perspektivischer Darstellung die Werkzeugspindel und das äußere Magazinrad nach der Abgabe des Werkzeuges in das äußere Magazinrad,
- Fig. 12: eine perspektivische Teildarstellung mit dem äußeren Magazinrad, dem inneren Magazinrad und der Werkzeugspindel,
- Fig. 13: eine axiale Draufsicht auf das äußere Magazinrad und das innere Magazinrad,
- Fig. 14-18: die Abgabe eines Schleifscheibenschutzes in das innere Magazinrad,
- Fig. 19-24: in einer vereinfachten Darstellung die gemeinsame Aufnahme eines Schleifwerkzeuges und eines Schleifscheibenschutzes durch die Werkzeugspindel.

In der dargestellten Ausführung ist die Werkzeugmaschine beispielhaft als Schleifmaschine dargestellt. Es ist ohne Weiteres ersichtlich und aus der folgenden Beschreibung erkennbar, dass die Erfindung auch bei anderen Werkzeugmaschinen, insbesondere Bohr-, Fräs- und Drehmaschinen eingesetzt werden kann.

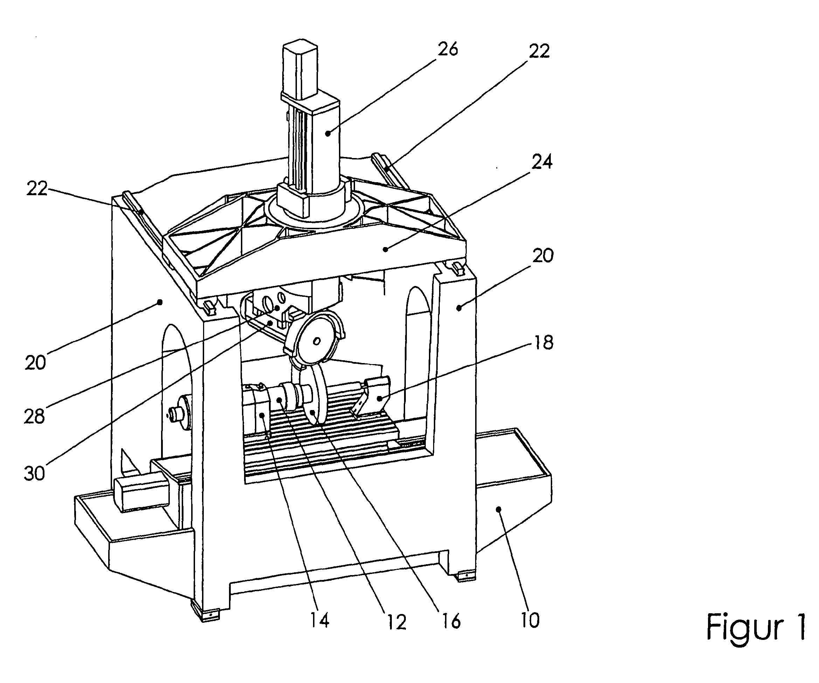

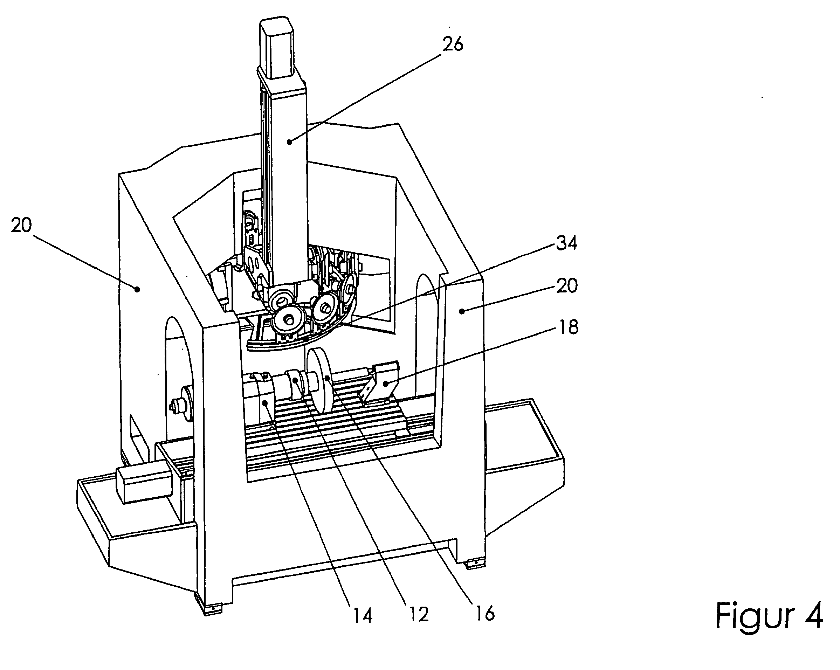

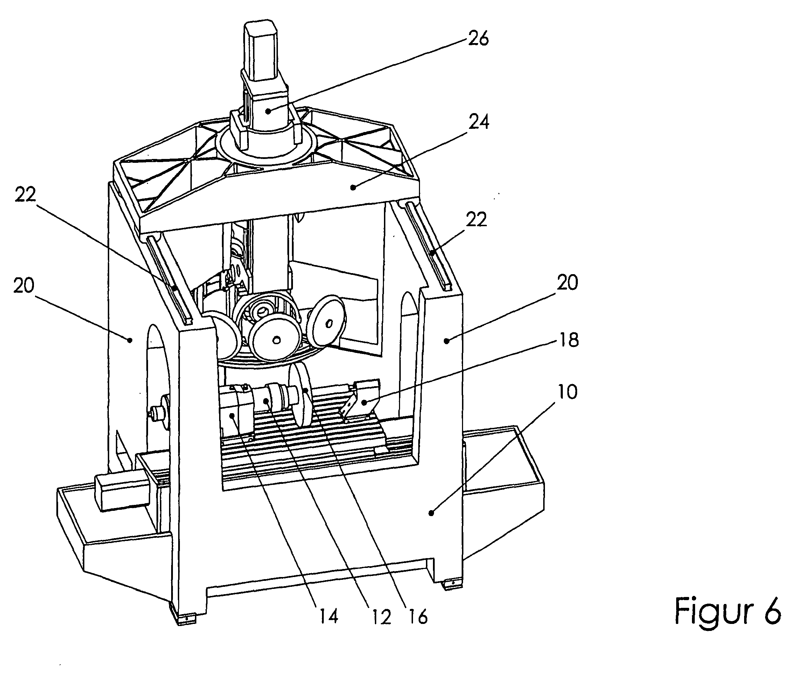

Wie die Figuren 1 bis 6 zeigen, weist die Werkzeugmaschine ein horizontales Maschinenbett 10 auf, auf welchem horizontal in der X-Achse verfahrbar eine Werkstückspindel 12 gelagert ist. Die Werkstückspindel 12 ist horizontal in der X-Achse angeordnet und über einen Werkstückspindelantrieb 14 rotierend antreibbar. An der Werkstückspindel kann ein Werkstück 16 gespannt werden, das gegebenenfalls durch einen Reitstock 18 abgestützt wird. An beiden Seiten des Maschinenbettes 10 ist jeweils eine vertikal nach oben gerichtete Seitenwange 20 ausgebildet. Auf den horizontalen in der Y-Achse verlaufenden Oberseiten der Seitenwangen 20 ist jeweils eine Y-Führung 22 angeordnet. Auf diesen Y-Führungen 22 ist eine Brücke 24 gelagert, die in der Y-Achse gesteuert angetrieben verfahrbar ist und den Arbeitsraum der Werkzeugmaschine zwischen den Seitenwangen 20 überspannt. Zentrisch in der Brücke 24 ist ein Z-Schlitten 26 gelagert, der gesteuert antreibbar in der vertikalen Z-Achse verfahrbar und gesteuert antreibbar um seine vertikale Achse (C-Achse) drehbar ist. Am unteren Ende des Z-Schlittens 26 ist ein Träger 28 befestigt, an welchem eine drehantreibbare Werkzeugspindel 30 mit horizontaler Achse gelagert ist, die in der horizontalen Achse gesteuert verfahrbar ist.

Insoweit entspricht der Aufbau der Werkzeugmaschine der in der deutschen Patentanmeldung 10 2006 011 551.1 beschriebenen Werkzeugmaschine.

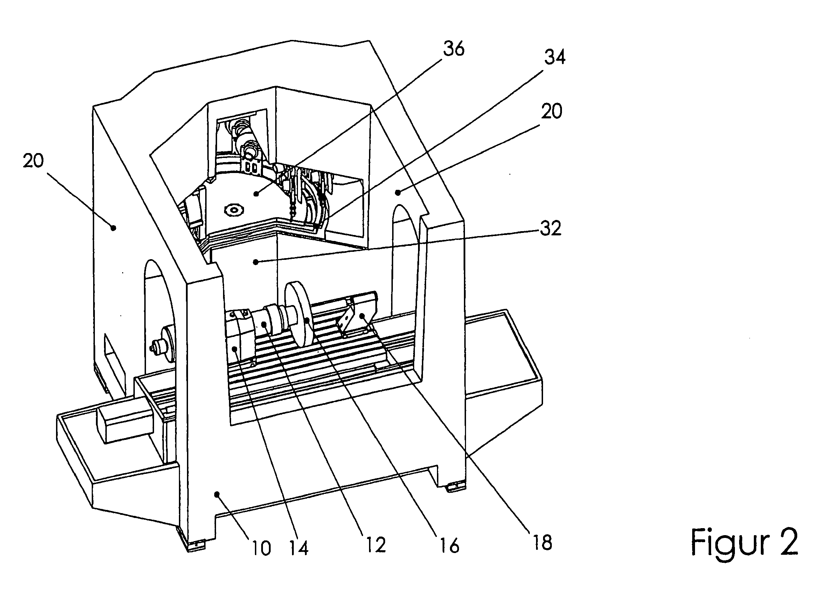

In der Darstellung der Figur 1 befindet sich die Werkzeugspindel 30 in der Arbeitsposition, in welcher ein an der Werkzeugspindel 30 aufgenommenes Werkzeug das Werkstück 16 bearbeitet. Das Werkzeug ist beispielsweise eine Schleifscheibe zur Schleifbearbeitung des Werkstückes 16. In Figur 2 sind zur besseren Erkennbarkeit die Brücke 24 und der Z-Schlitten 26 mit der Werkzeugspindel 30 weggelassen. Es ist zu erkennen, dass der Arbeitsraum auf der von der Bedienerseite (in den Figuren 1 bis 6 die Vorderseite) abgewandten Rückseite nach hinten, z. B. polygonal, ausgewölbt ist, um die Drehung der horizontalen Werkzeugspindel 30 um die vertikale Rotationsachse (C-Achse) zu ermöglichen. Die Rückseite des Arbeitsraumes ist durch wegbewegbare Trennwände 32 abgeschlossen. Hinter diesen Trennwänden 32 befindet sich das nachfolgend beschriebene Werkzeugmagazin, in welchem Werkzeuge gespeichert und zum Einwechseln in die Werkzeugspindel 30 bereit gestellt sind.

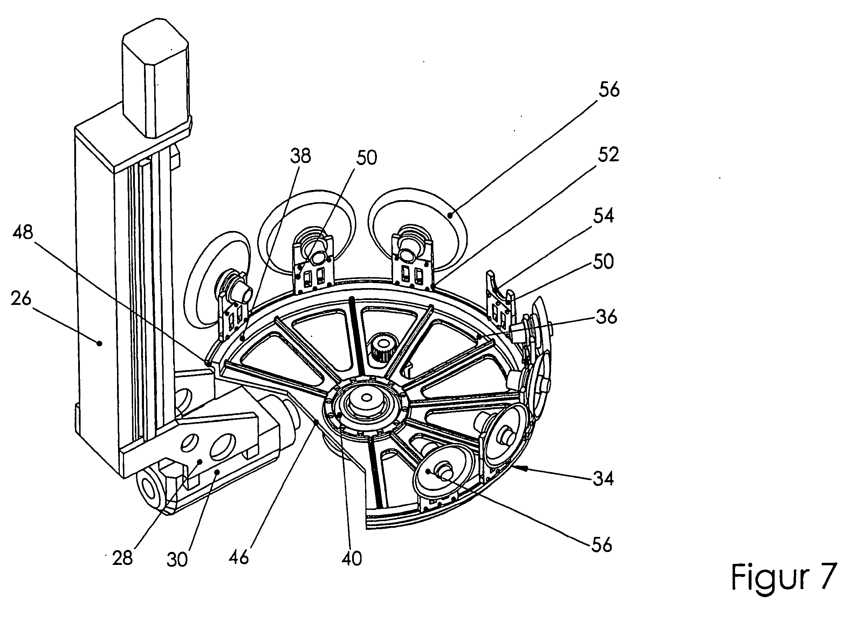

In den Figuren 7 bis 11 ist eine einfache Ausführung des Werkzeugmagazins dargestellt.

Das Werkzeugmagazin weist ein Magazinrad 34 auf, welches um eine vertikale, zur Z-Achse parallele Achse gesteuert drehbar angetrieben wird. Das Magazinrad 34 besteht aus einer in der horizontalen Ebene liegenden kreisförmigen Magazinscheibe 36, an deren Außenumfang ein vertikal nach oben weisender Magazinring 38 angeordnet ist. Die Magazinscheibe 36 kann als geschlossene Scheibe ausgebildet sein, ist vorzugsweise jedoch als Speichenscheibe ausgebildet, wie dies in der Zeichnung dargestellt ist. Die Magazinscheibe 36 sitzt zentrisch auf einer vertikalen Antriebswelle 40, die unterhalb der Magazinscheibe 36 über einen Zahnriemen 42 von einem NC-gesteuerten Motor 44 antreibbar ist.

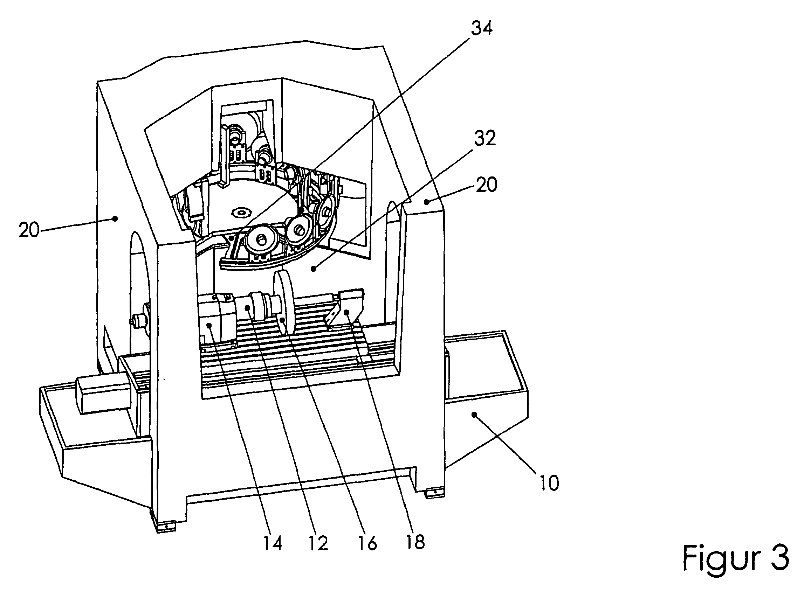

Die Magazinscheibe 36 und damit das gesamte Magazinrad 34 ist in einem Winkelbereich mit einem segmentförmigen Ausschnitt 46 ausgebildet. Die Form dieses Ausschnittes 46 entspricht in ihrem Verlauf dem polygonalen Verlauf der Trennwände 32. Ist das Magazinrad 34 in seiner Drehstellung so ausgerichtet, dass der Ausschnitt 46 dem Arbeitsraum zugewandt ist, so können die Trennwände 32 innerhalb dieses Ausschnittes 46 in die Schließstellung bewegt werden. Sind die Trennwände 32 in ihrer Offenstellung zurückgefahren, so kann das Magazinrad 34 um seine vertikale Achse gedreht werden und greift mit seinem Umfang in den Arbeitsraum der Werkzeugmaschine hinein. Diese beiden Stellungen sind in den Figuren 2 und 3 gezeigt. Die Ausbildung des Magazinrades 34 mit dem segmentartigen Ausschnitt 46 ermöglicht es, die Antriebswelle 40 baulich nahe an dem nach hinten ausgewölbten Arbeitraum anzuordnen, sodass die Grundfläche der Werkzeugmaschine durch das Werkzeugmagazin wenig vergrößert wird.

In den oberen Rand des Magazinringes 38 ist eine in diesem Magazinring 38 koaxial umlaufende T-Nut eingearbeitet. In diese T-Nut 48 sind Werkzeughalter 50 eingesetzt, die mit einem Fuß 52 auf dem Magazinring 38 aufsitzen und in die T-Nut 48 eingreifen. Mit diesem Fuß 52 können die Werkzeughalter 50 in der T-Nut in Umfangsrichtung des Magazinringes 38 verschoben und in der gewünschten Position geklemmt werden. Die Werkzeughalter 50 weisen von dem Fuß 52 vertikal nach oben und bilden jeweils eine sich U-förmig nach oben öffnende Aufnahme 54 für ein Werkzeug. 54 sind entsprechend den zu magazinierenden Werkzeugen ausgebildet. Im dargestellten Ausführungsbeispiel sind Werkzeuge 56 in Form von Schleifscheiben dargestellt, die einen genormten Kegelschaft für eine Hohlschaftkegel-Werkzeugaufnahme aufweisen. Die Aufnahme 54 ist so ausgebildet, dass das Werkzeug 56 von oben in die Aufnahme 54 eingelegt werden kann, wobei der Werkzeughalter 50 mit seiner Aufnahme 54 in die Greifrille des Kegelschaftes eingreift. Das Werkzeug 56 wird in der Aufnahme 54 ohne zusätzliche Befestigung und Verriegelung durch sein Eigengewicht sicher gegen Zentrifugalkräfte und Kippmomente gehalten. Die Werkzeuge 56 werden in die Werkzeughalter 50 so eingesetzt, dass ihre Kegelschäfte von dem Magazinring 38 radial nach innen gerichtet sind, während das eigentliche Werkzeug radial nach außen gerichtet ist. Da der Durchmesser des eigentlichen Werkzeugs in der Regel größer ist als der Durchmesser des Kegelschaftes, ergibt sich hierdurch eine optimale Platzausnützung des Magazinumfanges. Die Werkzeughalter 50 können in der T-Nut 48 in Umfangsrichtung des Magazinringes 38 so verschoben und im gegenseitigen Winkelabstand angeordnet werden, dass entsprechend dem Durchmesser der jeweiligen Werkzeuge 56 eine optimale Ausnützung des Umfanges des Magazinrades 34 erreicht wird. In der jeweils optimierten Winkelposition werden die Werkzeughalter 50 in der T-Nut 48 des Magazinringes 38 geklemmt und fixiert. Die Positionen der Werkzeughalter 50 werden als Winkelpositionswerte in der Steuerung des Motors 44 hinterlegt und können dem jeweiligen Anwendungsfall entsprechend variiert und angepasst werden.

Der Werkzeugwechsel wird anhand der Figuren 7 bis 11 erläutert.

Figur 7 zeigt die Arbeitsstellung der Werkzeugmaschine. Das Magazinrad 34 befindet sich in der in Figur 2 gezeigten Stellung, in welcher der Ausschnitt 46 mit der Lage der Trennwände 32 übereinstimmt. Im Bereich dieses Ausschnittes 46 ist das Magazinrad 34 durch die in Figur 7 nicht dargestellten Trennwände 32 von dem Arbeitsraum abgeschirmt. Die Bearbeitung eines Werkstückes 16 kann durchgeführt werden. Das Werkstück 16 wird auf dem Maschinenbett 10 in der X-Achse bewegt, wobei es gegebenenfalls auch noch um seine eigene Achse gedreht werden kann (A-Achse). Das Werkzeug 56 ist in der Werkzeugspindel 30 gespannt. Das Werkzeug 56 führt mittels des Z-Schlittens 26 eine Vertikalbewegung durch, wobei die horizontale Achse der Werkzeugspindel 30 um die vertikale Achse des Z-Schlittens 26 drehbar ist. Der Z-Schlitten 26 kann mittels der Brücke 24 in der Y-Achse verfahren werden. Zusätzlich kann die Werkzeugspindel 30 in ihrer Achse bezüglich des Z-Schlittens 26 in dem Träger 28 horizontal verfahren werden. Gegebenenfalls kann zusätzlich auch der Neigungswinkel der Achse der Werkzeugspindel 30 gegen die Horizontalebene verstellt werden.

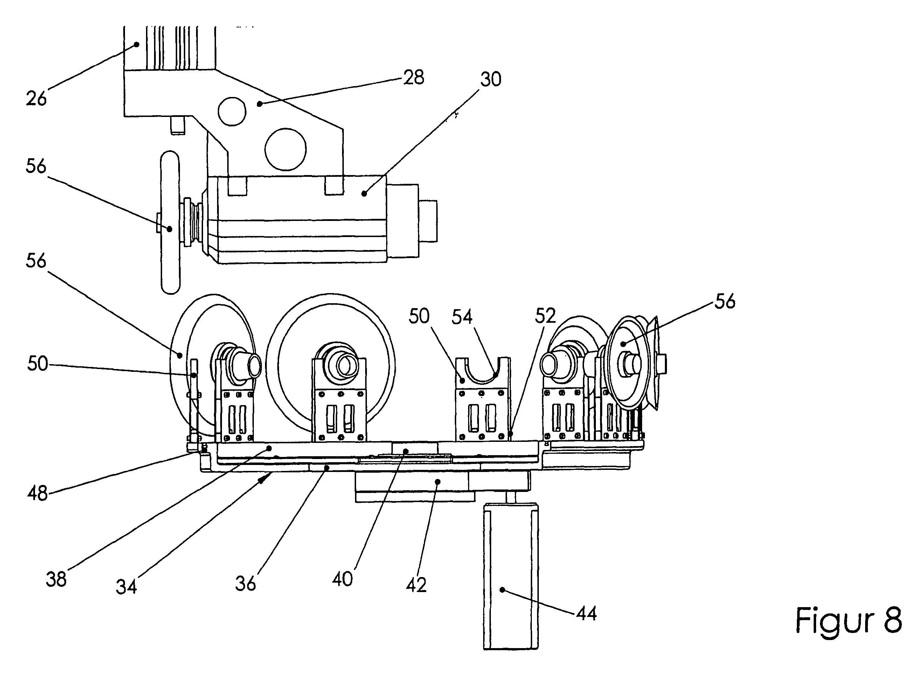

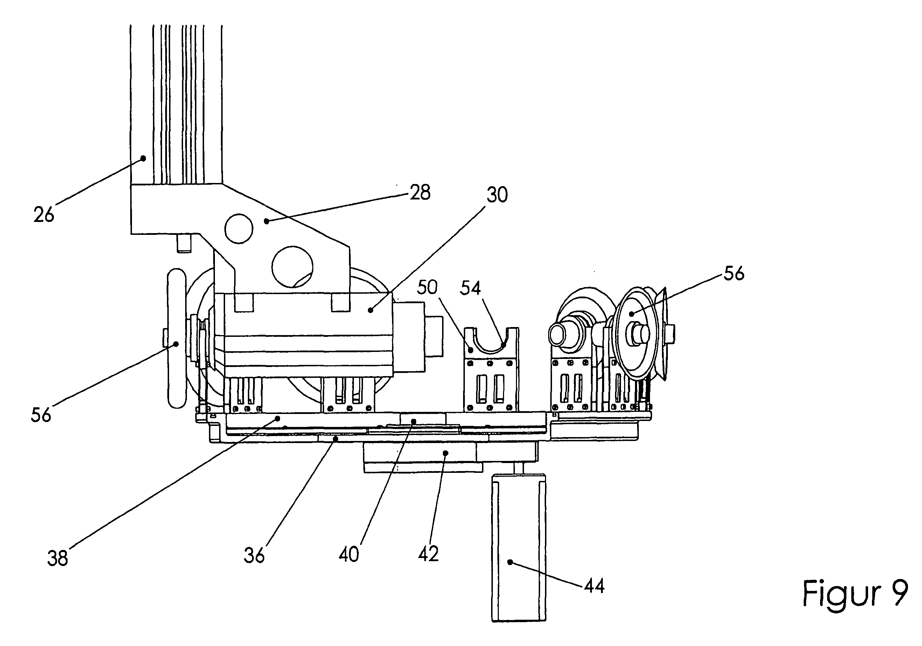

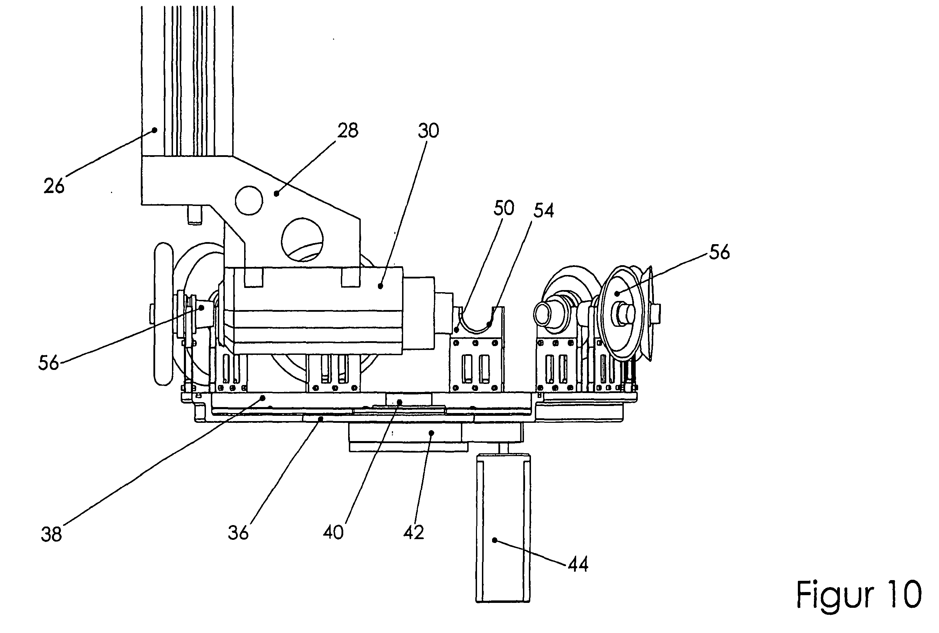

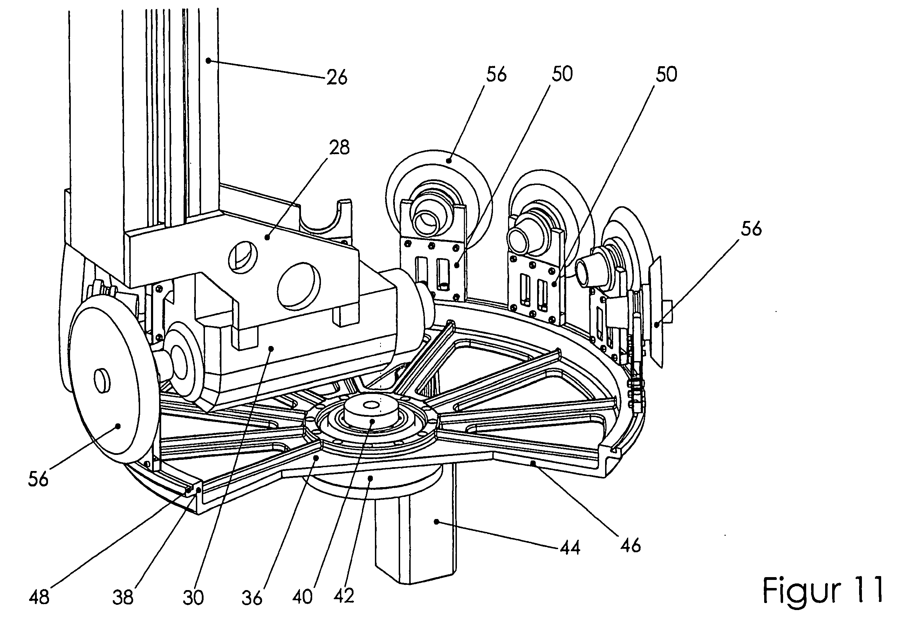

Um einen Werkzeugwechsel durchzuführen, werden zunächst die Trennwände 32 weggefahren, sodass das Magazinrad 34 in den Arbeitsraum hineindrehen kann. Wie Figur 8 zeigt, wird das Magazinrad 34 über den gesteuerten Antrieb des Motors 44 so gedreht, dass ein freier Werkzeughalter 50' in die Wechselposition gebracht wird, d. h. in der Ebene der Y-Bewegung des Z-Schlittens 26 positioniert ist. Der Z-Schlitten 26 wird so gedreht, dass der Träger 28 mit der Werkzeugspindel 30 ebenfalls in dieser Ebene ausgerichtet ist. Nun fährt die Brücke 24 in der Y-Achse nach hinten, bis sich die Werkzeugspindel 30 oberhalb des Magazinrades 34 und innerhalb des Umfanges des Magazinringes 38 befindet, wie dies in Figur 8 dargestellt ist. Dann wird der Z-Schlitten 26 vertikal nach unten gefahren, wodurch das Werkzeug 56 mit seiner Greifrille in die Aufnahme 54 des freien Werkzeughalters 50' eingelegt wird, wie dies in Figur 9 gezeigt ist. Anschließend fährt der Z-Schlitten 26 in der Y-Achse weiter nach hinten, wodurch die Werkzeugspindel 30 radial von dem Magazinring 38 nach innen bewegt wird und die HSK-Aufnahme der Werkzeugspindel 30 den Kegelschaft des Werkzeuges 56 freigibt, wie dies in den Figuren 10 und 11 gezeigt ist. Alternativ zu einem Verfahren des Z-Schlittens 26 in der Y-Achse kann auch die Werkzeugspindel 30 in dem Träger 28 verfahren werden. In der in den Figuren 10 und 11 gezeigten Stellung kann nun das Magazinrad 34 über den Motor 44 gesteuert verdreht werden, bis das nächste ausgewählte Werkzeug 56 in der Wechselposition radial vor der Werkzeugaufnahme der Werkzeugspindel 30 positioniert ist. In dieser Stellung wird die Werkzeugspindel 30 mittels des Z-Schlittens 26 wieder radial nach außen geschoben, wodurch sich ihre Werkzeugaufnahme auf den Kegelschaft des nun positionierten nächsten Werkzeuges schiebt und diesen spannt. Mittels des Z-Schlittens 26 wird nun die Werkzeugspindel 30 mit dem gespannten nächsten Werkzeug 56 nach oben gefahren, wodurch das Werkzeug 56 aus dem Werkzeughalter 50 herausgehoben wird. Sobald sich die Werkzeugspindel 30 mit dem Werkzeug 56 oberhalb des Magazinringes 38 befindet, kann die Werkzeugspindel 30 wieder in die Arbeitsstellung gefahren werden. Das Magazinrad 34 wird wieder in die in den Figuren 2 und 7 gezeigte Grundstellung zurückgedreht, die Trennwände 32 werden geschlossen und die Bearbeitung des Werkstückes 16 mit dem neuen Werkzeug 56 kann beginnen.

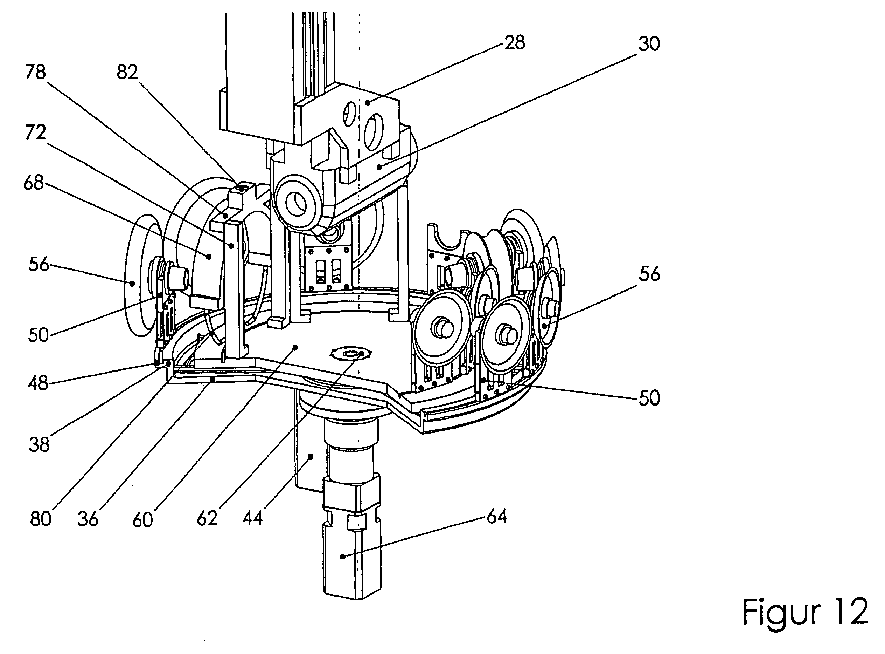

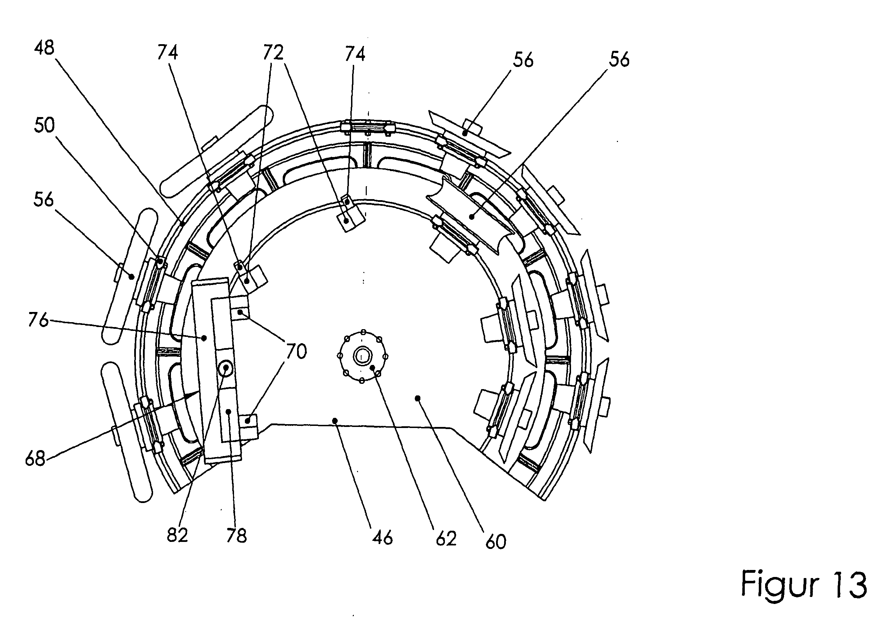

Weiter weist das Werkzeugmagazin zusätzlich zu dem ersten äußeren Magazinrad 34 ein zweites inneres Magazinrad 58 auf, wie dies insbesondere in den Figuren 12 und 13 dargestellt ist.

Das innere Magazinrad 58 ist koaxial zu dem äußeren Magazinrad 34 angeordnet und weist eine Magazinscheibe 60 auf, die konzentrisch und parallel auf der Magazinscheibe 36 des äußeren Magazinrades 34 angeordnet ist. Der Außendurchmesser der Magazinscheibe 60 ist kleiner als der Innendurchmesser des Magazinringes 38 des äußeren Magazinrades 34. Das innere Magazinrad 58 ist frei gegenüber dem äußeren Magazinrad 34 drehbar. Hierzu weist die Magazinscheibe 60 des inneren Magazinrades 58 eine vertikale zentrische Antriebswelle 62 auf, die koaxial drehbar in der als Hohlwelle ausgebildeten Antriebswelle 40 des äußeren Magazinrades 34 gelagert ist. Das innere Magazinrad 58 ist über seine Antriebswelle 62 mittels eines unterhalb des äußeren Magazinrades 34 angeordneten NC-steuerbaren Motors 64 unabhängig von dem äußeren Magazinrad 34 antreibbar.

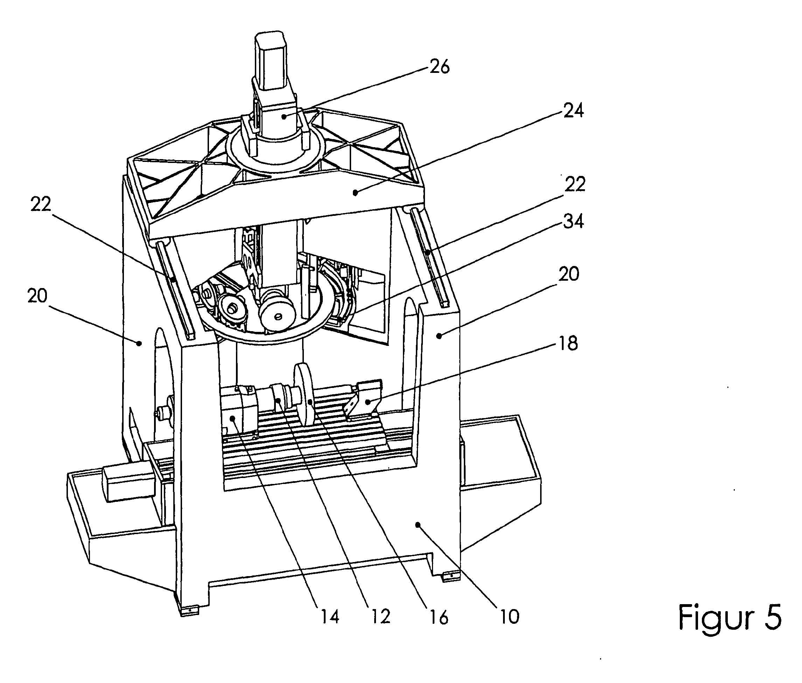

Wie Figur 5 zeigt, kann das innere Magazinrad 38 im Wesentlichen in entsprechender Weise ausgebildet sein wie das äußere Magazinrad 34. Auf der Oberseite der Magazinscheibe 60 läuft konzentrisch ein Magazinring, in welchem Werkzeughalter in ihrer Winkelposition einstellbar angeordnet und geklemmt werden können. Der Magazinring und die Werkzeughalter können in entsprechender Weise ausgebildet sein, wie dies vorstehend für das äußere Magazinrad 34 beschrieben ist. Der Magazinring mit den Werkzeughaltern ist jedoch - wie dies Figur 5 zeigt - mit einem kleineren Radius ausgebildet als die Magazinscheibe 60, sodass zwischen dem Magazinring des inneren Magazinrades 58 und dem Magazinring 38 des äußeren Magazinrades 34 ein radialer Abstand frei bleibt, welcher für die Aufnahme der in dem inneren Magazinrad 58 bevorrateten Werkzeuge 56 erforderlich ist.

Die Entnahme und Abgabe der Werkzeuge 56 in das innere Magazinrad 58 erfolgt dabei in gleicher Weise, wie dies für das äußere Magazinrad 34 vorstehend beschrieben ist. Das innere Magazinrad 58 weist ebenfalls einen Ausschnitt 46 auf, der bei Winkelausrichtung des äußeren Magazinrades 34 und des inneren Magazinrades 58 mit dem Ausschnitt 46 des äußeren Magazinrades 34 deckungsgleich ist. Insbesondere weist auch der Magazinring des inneren Magazinrades 58 einen entsprechenden Winkelausschnitt auf, damit die Werkzeuge 56 im äußeren Magazinrad 34 für die Werkzeugspindel 30 in der oben beschriebenen Weise durch diesen Ausschnitt im Magazinring des inneren Magazinrades 58 frei zugänglich sind.

Durch die unabhängige gesteuerte Einstellbarkeit der Drehpositionen des äußeren Magazinrades 34 und des inneren Magazinrades 58 können diese unabhängig voneinander in die Wechselposition gebracht werden und Werkzeuge 56 können in beliebig programmierbarer Weise alternativ in und aus dem äußeren Magazinrad 34 oder dem inneren Magazinrad 58 gewechselt werden. Das innere Magazinrad 58 erhöht somit die Zahl der Werkzeug-Speicherplätze des gesamten Werkzeugmagazins, ohne die Außenabmessungen des Werkzeugmagazins zu vergrößern.

Eine besondere Verwendung des inneren Magazinrades 58 ist in den Figuren 12 und 13 gezeigt. In dieser Ausführung dient das Werkzeugmagazin dazu, sowohl spanabhebende Werkzeuge 56, insbesondere Schleifscheiben, als auch zugehörige Schutzvorrichtungen, insbesondere einen Schleifscheibenschutz, zum Einwechseln zur Verfügung zu halten. Wie die Figuren 12 und 13 zeigen, sind in dieser Ausführung in dem äußeren Magazinrad 34 die Werkzeuge 56 in der vorstehend beschriebenen Weise bereitgehalten. Das innere Magazinrad 58 trägt die Schutzvorrichtungen, die insbesondere die Form eines Schleifscheibenschutzes haben.

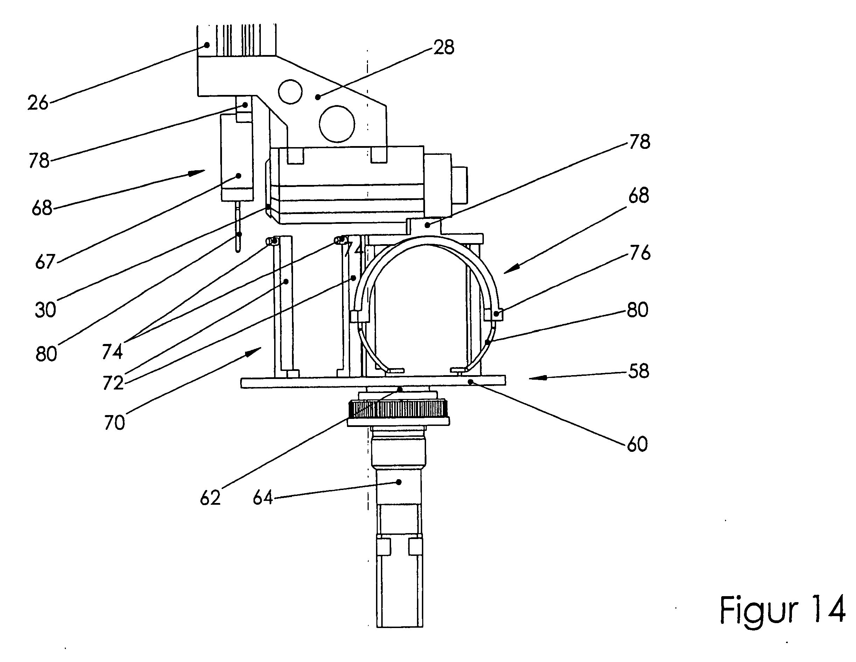

In den Figuren 14 bis 18 ist der Wechsel eines solchen Schleifscheibenschutzes 68 dargestellt. Dabei ist zur leichteren Verständlichkeit nur das innere Magazinrad 58 des in den Figuren 12 und 13 dargestellten kompletten Magazins gezeigt, während das äußere Magazinrad 34 weggelassen ist.

Auf der Magazinscheibe 60 des inneren Magazinrades 58 sind gegen dem Umfang radial beabstandet und auf einem konzentrischen Kreis im Winkel gegeneinander versetzt Schutzaufnahmen 70 angebracht. Die Schutzaufnahmen 70 bestehen jeweils aus einem Paar von senkrecht von der Magazinscheibe 60 nach oben abstehenden Trägerarmen 72, die an ihrem freien oberen Ende jeweils einen radial nach außen gerichteten Aufnahmedorn 74 aufweisen. Der Abstand der jeweils zwei Trägerarme 72 einer Schutzaufnahme 70 und die Anordnung ihrer Aufnahmedorne 74 sind so gewählt, dass ein Schleifscheibenschutz 68 auf diese Aufnahmedorne 74 aufgeschoben und durch diese getragen werden kann. Der Schleifscheibenschutz 68 besteht aus einer Schutzabdeckung 76, die den Außenumfang der Schleifscheibe teilweise abdeckt, einem oben an der Schutzabdeckung 76 angebrachten Tragbügel 78 und gegebenenfalls Kühlmitteldüsen 80. Der Tragbügel 78 verläuft horizontal und im Wesentlichen tangential zu der Schutzabdeckung 76. In den beiden Enden des Tragbügels 78 sind jeweils Bohrungen für die Aufnahmedorne 74 vorgesehen. Mittig oben in dem Tragbügel 78 ist eine vertikale Kupplungsbohrung 82 vorgesehen. An dem Träger 28 des Z-Schlittens 26 ist ein nach unten ragender Kupplungszapfen 84 vor der Werkzeugaufnahme der Werkzeugspindel 30 angeordnet, der zur Fixierung des Schleifscheibenschutzes 68 mit der Kupplungsbohrung 82 zusammenwirkt.

Figur 14 zeigt die Arbeitsstellung, in welcher entsprechend den Figuren 1 und 2 der Schleifscheibenschutz 68 an dem Träger 28 verriegelt ist-und mit seiner Schutzabdeckung 76 die in Figur 14 nicht gezeigte Schleifscheibe abdeckend umgreift. Über die Kühlmitteldüsen 80 wird ein Kühlmittel auf das zu bearbeitende Werkstück 16 aufgesprüht. Das Magazinrad 58 befindet sich - ebenso wie das nicht dargestellte äußere Magazinrad 34 - in der Grundstellung, in welcher der Ausschnitt 46 mit den geschlossenen Trennwänden 32 zur Deckung kommt.

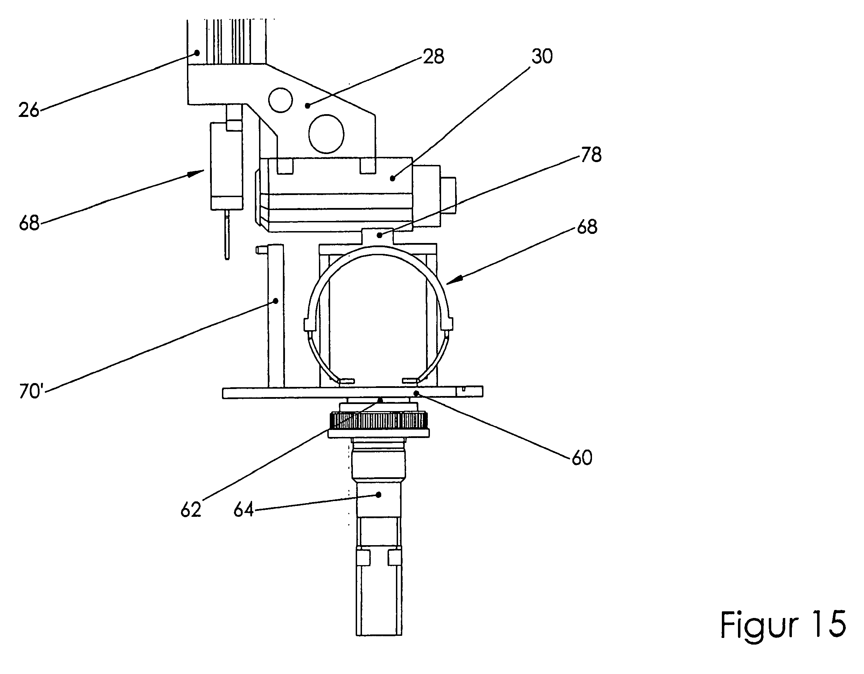

Für den Wechsel des Schleifscheibenschutzes 68 wird nach Öffnen der Trennwände 32 das innere Magazinrad 58 in die in Figur 15 gezeigte Wechselposition gedreht, in welcher eine freie Schutzaufnahme 70' dem Arbeitsraum zugewandt und in der Y-Z-Ebene des Z-Schlittens 26 ausgerichtet ist.

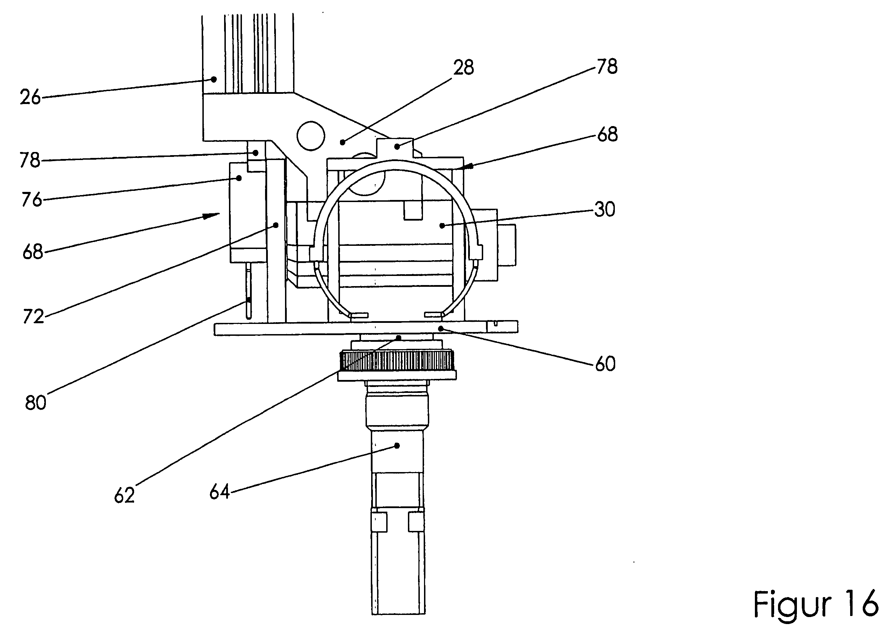

In dieser Position des Magazinrades 58 wird der Z-Schlitten 26 mit ebenfalls in der Y-Z-Ebene ausgerichteter Werkzeugspindel 30 abgesenkt, bis der an dem Träger 28 verriegelte Schleifscheibenschutz 68 vor der freien Schutzaufnahme 70' ausgerichtet ist. Dann wird der Z-Schlitten 26 mit dem Träger 28 nach hinten, d. h. in Figur 16 nach rechts, verschoben, wodurch der Tragbügel 78 des Schleifscheibenschutzes 68 auf die Aufnahmedorne 74 der freien Schutzaufnahme 70' geschoben wird. Diese Position ist in Figur 16 gezeigt.

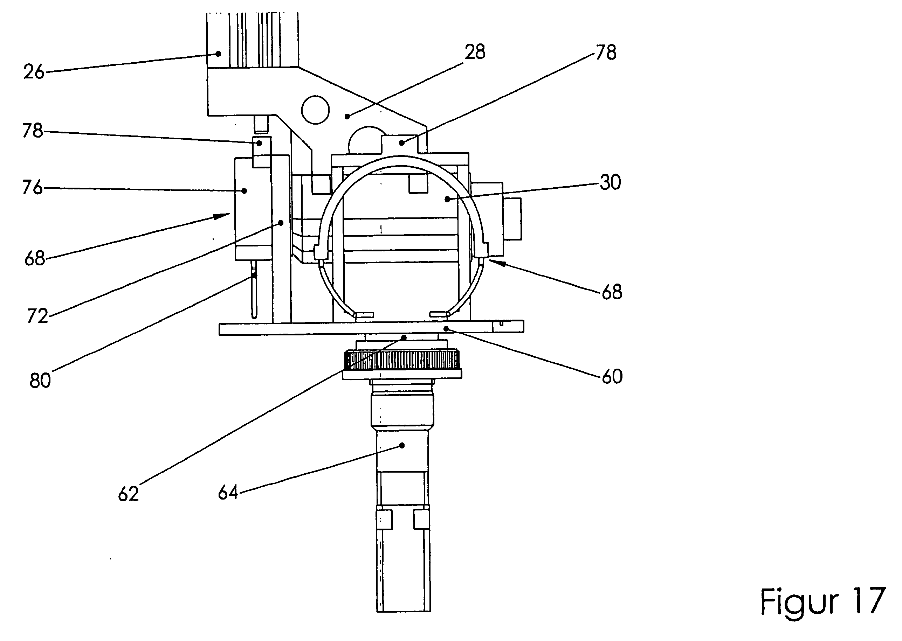

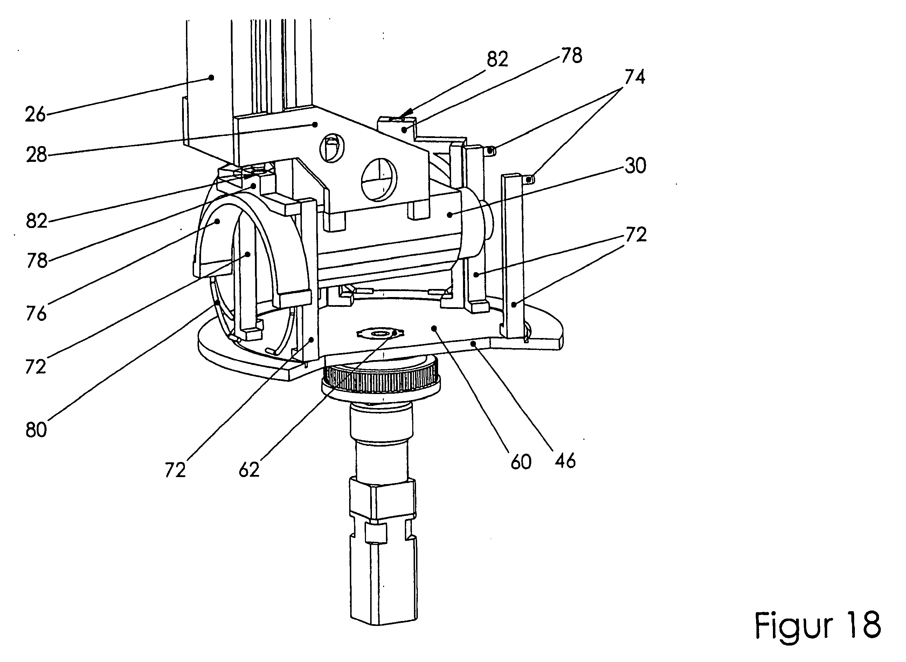

Anschließend wird der Z-Schlitten 26 vertikal nach oben gefahren, wodurch der Kupplungszapfen 84 aus der Kupplungsbohrung 82 des nun in der Schutzaufnahme 70 sitzenden Schleifscheibenschutzes 68 gezogen wird. Dies ist in den Figuren 17 und 18 gezeigt.

Nun kann das Magazinrad 58 gegenüber dem Träger 28 mit der Werkzeugspindel 30 gedreht werden, um einen anschließend einzuwechselnden Schleifscheibenschutz 68 in die Wechselposition vor der Werkzeugspindel 30 zu positionieren. Ist dies geschehen, so wird der Träger 28 mit dem Kupplungszapfen 84 wieder abgesenkt, um den neu einzuwechselnden, nun positionierten Schleifscheibenschutz 68 mit dem Träger 28 zu kuppeln. Anschließend wird der Z-Schlitten 26 mit dem Träger 28 radial nach vorn, d. h. in der Zeichnung nach links verschoben, um den eingekuppelten Schleifscheibenschutz 68 von den Aufnahmedornen 74 abzuziehen, sodass die Werkzeugspindel 30 nun mit dem neu eingekuppelten Schleifscheibenschutz 68 arbeiten kann.

Es ist ohne weiteres aus den Figuren 12 und 13 ersichtlich, dass aufgrund der unabhängig gesteuerten Verdrehbarbeit des ersten Magazinrades 34 und des zweiten Magazinrades 58 die Werkzeuge 56 und die Schutzeinrichtungen 68 unabhängig voneinander gewechselt werden können. Es können dadurch unterschiedliche Werkzeuge 56 mit verschiedenen Schutzeinrichtungen 68 beliebig kombiniert werden. Falls ein Werkzeug, z. B. in Folge von Verschleiß, gegen ein gleichartiges neues Werkzeug gewechselt werden muss, kann nur das Werkzeug gewechselt werden, während der Schleifscheibenschutz nicht ausgetauscht werden muss.

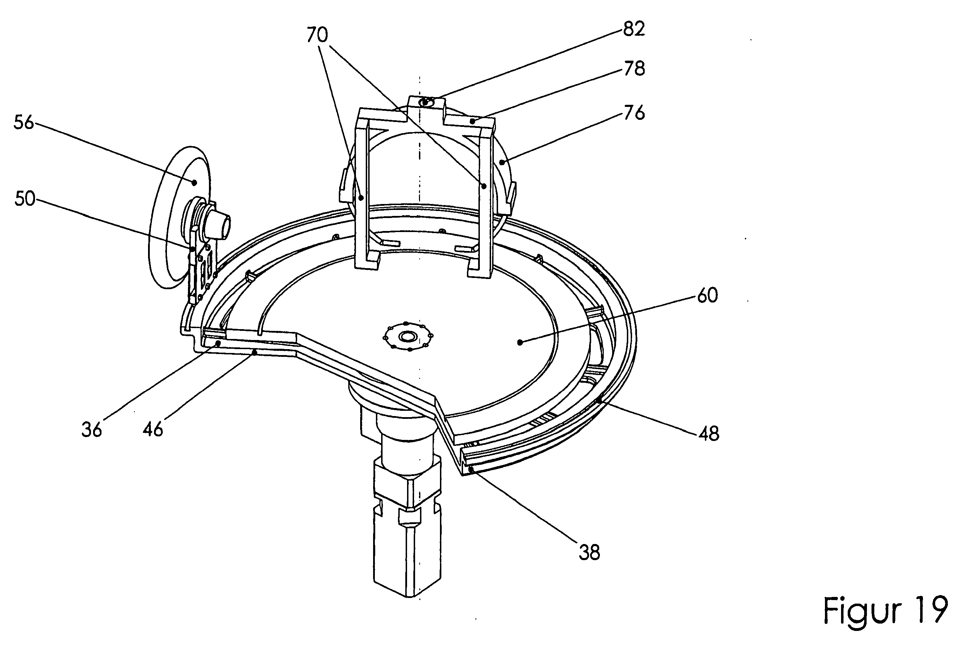

In den Figuren 19 bis 24 ist schließlich dargestellt, wie ein gleichzeitiger Wechsel eines Werkzeuges 56 und einer zugehörigen Schutzeinrichtung, z. B. eines Schleifscheibenschutzes 68, erfolgen kann. Zur einfachen und übersichtlichen Darstellung ist nur ein Werkzeug 56 in dem äußeren Magazinrad 34 und ein Schleifscheibenschutz 68 in dem inneren Magazinrad 58 dargestellt. Die übrigen Werkzeuge und Schleifscheibenschutzeinrichtungen sind weggelassen.

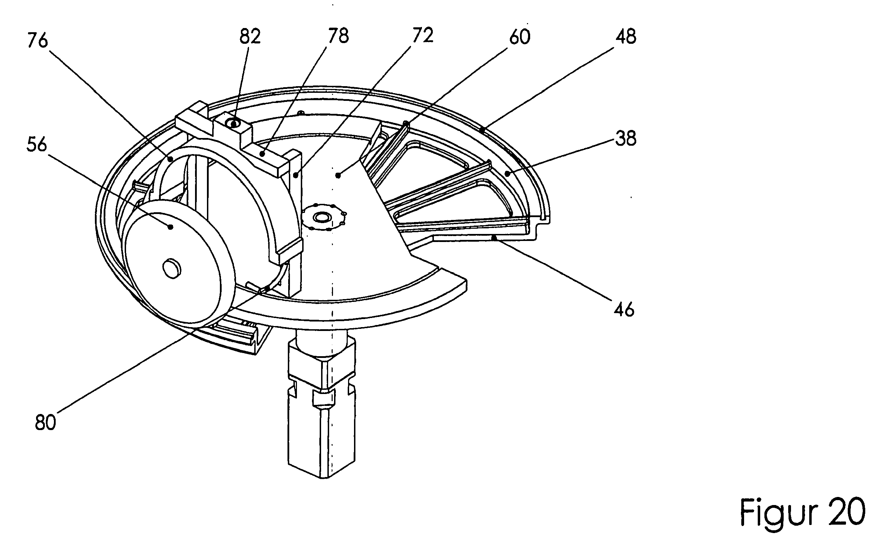

Figur 19 zeigt die Grundstellung, während der Werkstück-Bearbeitungszeit. Nach Beendigung der Bearbeitung und nach dem Öffnen der Trennwände 32 werden das einzuwechselnde Werkzeug 56 und der einzuwechselnde zugehörige Schleifscheibenschutz 68 radial fluchtend in der auf den Arbeitsraum gerichteten Wechselposition ausgerichtet, wie dies Figur 20 zeigt.

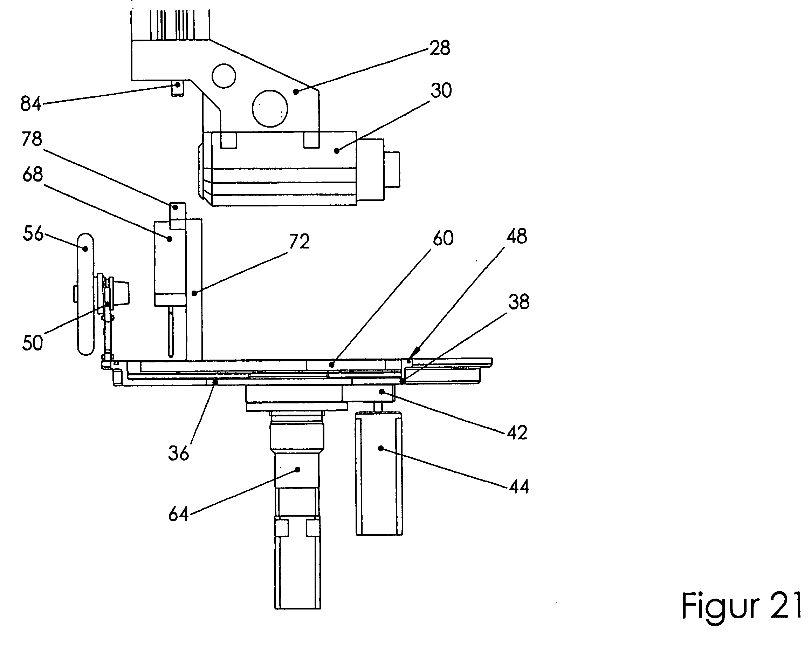

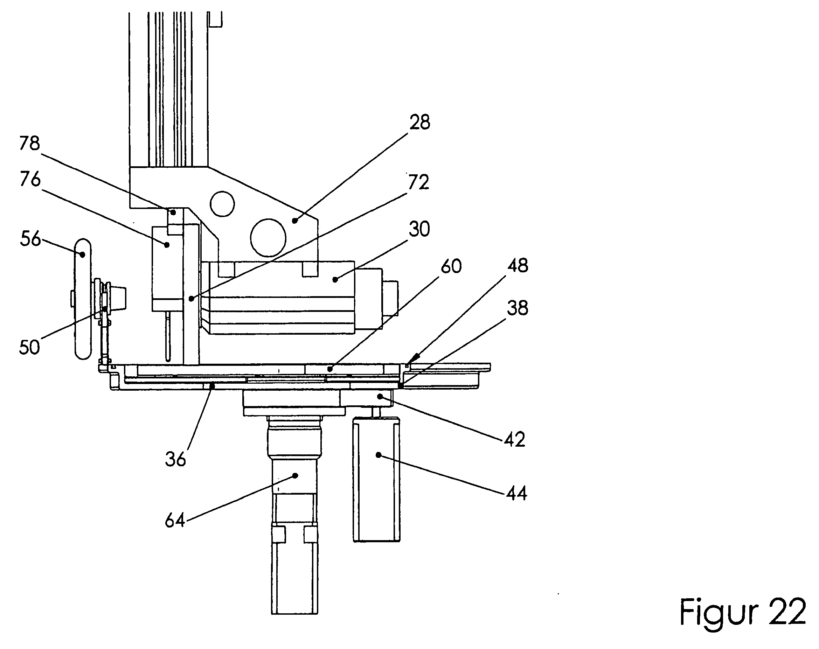

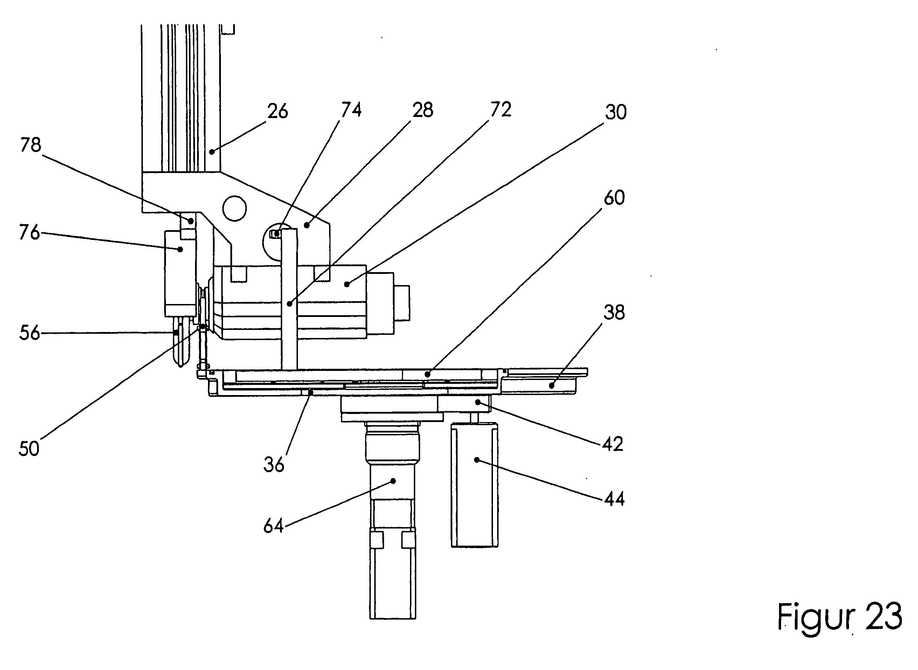

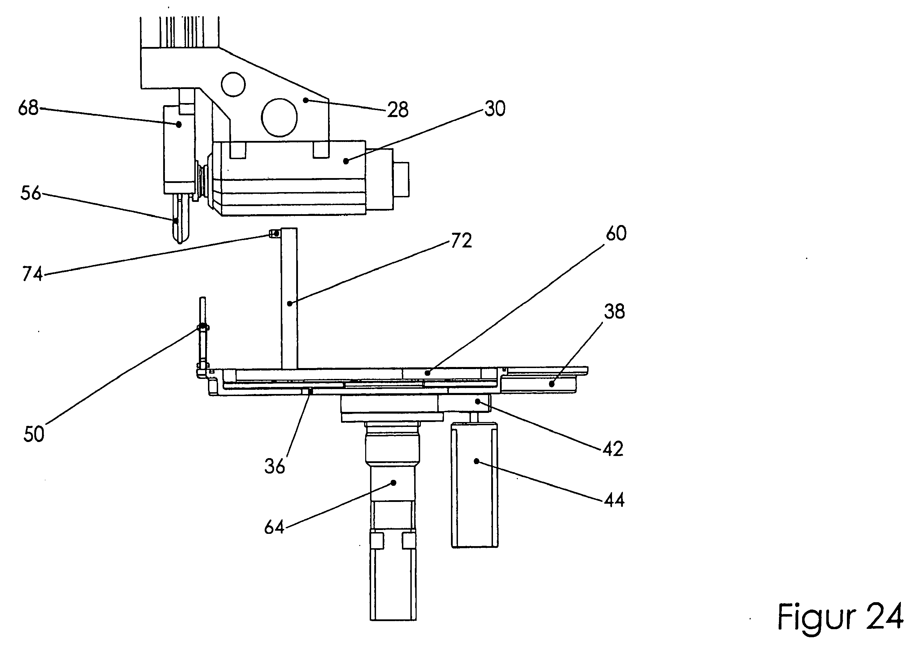

Anschließend wird der Z-Schlitten 26 mit dem Träger 28 und der Werkzeugspindel 30 oberhalb des Werkzeugmagazines über den Schleifscheibenschutz 68 gefahren, wie dies Figur 21 zeigt. Dann wird der Z-Schlitten 26 vertikal abgesenkt, wobei der Kupplungszapfen 84 des Trägers 28 in die Kupplungsbohrung 82 eingreift und der Schleifscheibenschutz 68 mit dem Träger 28 gekuppelt wird. Dies zeigt Figur 22. Anschließend wird der Z-Schlitten 26 in der Y-Achse vorgeschoben, wie dies Figur 23 zeigt. Dabei wird der über den Kupplungszapfen 84 mit dem Träger 28 gekuppelte Schleifscheibenschutz 68 von den Aufnahmedornen 74 seiner Schutzaufnahme 70 in radialer Richtung abgezogen und die Werkzeugspindel 30 wird mit ihrer Werkzeugaufnahme auf den Werkzeugschaft des Werkzeuges 56 geschoben, sodass das Werkzeug 56 an der Werkzeugspindel 30 gespannt werden kann, wie dies in Figur 23 gezeigt ist. Anschließend wird der Z-Schlitten 26 vertikal hochgefahren, sodass das Werkzeug 56 aus seinem Werkzeughalter 50 herausgehoben wird, wie dies in Figur 24 gezeigt ist. Die Werkzeugspindel 30 mit dem gespannten Werkzeug 56 und dem an dem Träger 28 gekuppelten Schleifscheibenschutz 68 können nun in den Arbeitsraum zur Bearbeitung des Werkstückes verfahren werden.

Die Abgabe eines Werkzeuges 56 und eines zugehörigen Schleifscheibenschutzes 68 in das Werkzeugmagazin erfolgt in umgekehrter Reihenfolge dieser Schritte.

### Bezugszeichenliste

- 10: Maschinenbett
- 12: Werkstückspindel
- 14: Werkstückspindelantrieb
- 16: Werkstück
- 18: Reitstock
- 20: Seitenwangen
- 22: Y-Führungen
- 24: Brücke
- 26: Z-Schlitten
- 28: Träger
- 30: Werkzeugspindel
- 32: Trennwände
- 34: äußeres Magazinrad
- 36: Magazinscheibe
- 38: Magazinring
- 40: Antriebswelle
- 42: Zahnriemen
- 44: Motor
- 46: Ausschnitt
- 48: T-Nut
- 50: Werkzeughalter
- 50': freier Werkzeughalter
- 52: Fuß
- 54: Aufnahme
- 56: Werkzeuge
- 58: inneres Magazinrad
- 60: Magazinscheibe
- 62: Antriebswelle
- 64: Motor
- 68: Schleifscheibenschutz
- 70: Schutzaufnahmen
- 70': freie Schutzaufnahme
- 72: Trägerarme
- 74: Aufnahmedorn
- 76: Schutzabdeckung
- 78: Tragbügel
- 80: Kühlmitteldüsen
- 82: Kupplungsbohrung
- 84: Kupplungszapfen

## Patentansprüche

1. Werkzeugmagazin für eine Werkzeugmaschine mit Werkzeughaltern (50), die in dem Werkzeugmagazin in einer Reihe aufeinanderfolgend angeordnet sind und Werkzeuge (56) mit zu der Reihe im Wesentlichen senkrechter Werkzeugachse auswechselbar aufnehmen, wobei die Werkzeughalter (50) in ihrer Position in dem Werkzeugmagazin (34) in Richtung der Reihe verstellbar und in ihrer jeweiligen Position lösbar fixierbar sind,
**dadurch gekennzeichnet, dass** die Werkzeughalter (50) in ihrer jeweiligen Position an dem Werkzeugmagazin (34) klemmbar sind, wobei das Werkzeugmagazin (34) eine in Richtung der Reihe verlaufende T-Nut (48) aufweist, in welche die Werkzeughalter (50) eingreifen und in welcher die Werkzeughalter (50) verschiebbar geführt und klemmbar sind.

2. Werkzeugmagazin nach Anspruch 1,
**dadurch gekennzeichnet, dass** das Werkzeugmagazin ein kreisförmiges Magazinrad (34) aufweist und dass die Reihe der Werkzeughalter (50) in Umfangsrichtung an dem Magazinrad (34) angeordnet ist.

3. Werkzeugmagazin nach Anspruch 2,
**dadurch gekennzeichnet, dass** die werkzeughalter (50) am Umfang des Magazinrades (34) im Wesentlichen parallel zu dessen Achse angeordnet sind und die Werkzeuge (56) mit radial gerichteter Werkzeugachse aufnehmen.

4. Werkzeugmagazin nach Anspruch3,
**dadurch gekennzeichnet, dass** die Werkzeuge (56) mit radial in das Innere des Magazinrades (34) gerichtetem Schaft in den Werkzeughaltern (50) aufgenommen sind.

5. Werkzeugmagazin nach Anspruch 4,
**dadurch gekennzeichnet, dass** eine Werkzeugspindel (30) in das Innere des Magazinrades (34) verfahrbar ist und zum Werkzeugwechsel mit ihrer Werkzeugaufnahme mit der Werkzeugachse fluchtend radial in dem Magazinrad (34) bewegbar ist.

6. Werkzeugmagazin nach einem der Ansprüche 3 bis 5,
**dadurch gekennzeichnet, dass** das Magazinrad (34) mit vertikaler Achse angeordnet ist und dass die Werkzeughalter (50) eine sich nach oben öffnende Aufnahme (54) aufweisen, in welche das Werkzeug (56) von oben einlegbar ist und durch sein Gewicht in der Aufnahme (54) gehalten ist.

7. Werkzeugmagazin nach einem der vorhergehenden Ansprüche,
**dadurch gekennzeichnet, dass** die jeweiligen Positionen der Werkzeughalter (50), in welchen diese in dem Werkzeugmagazin (34) fixiert sind, in der Steuerung der Werkzeugmaschine abgelegt werden.

## Claims

1. A tool magazine for a machine tool with tool holders (50) which are arranged one after the other in a row in the tool magazine and which receive tools (56) in an interchangeable manner with the tool axis substantially at a right angle to the row, wherein the tool holders (50) are displaceable in their position in the tool magazine (34) in the direction of the row and are capable of being fixed in a detachable manner in their respective position, **characterized in that** the tool holders (50) are capable of being clamped in their respective position on the tool magazine (34), wherein the tool magazine (34) has a T-shaped groove (48) which extends in the direction of the row and into which the tool holders (50) engage and in which the tool holders (50) are guided in a displaceable manner and are capable of being clamped.

2. A tool magazine according to claim 1, **characterized in that** the tool magazine has a circular magazine wheel (34), and the row of the tool holders (50) is arranged on the magazine wheel (34) in the peripheral direction.

3. A tool magazine according to claim 2, **characterized in that** the tool holders (50) are arranged on the periphery of the magazine wheel (34) substantially parallel to the axis thereof and receive the tools (56) with the tool axis directed radially.

4. A tool magazine according to claim 3, **characterized in that** the tools (56) are received in the tool holders (50) with the shaft directed radially into the interior of the magazine wheel (34).

5. A tool magazine according to claim 4, **characterized in that** a tool spindle (30) is capable of being moved into the interior of the magazine wheel (34) and, for changing a tool, is movable radially into the magazine wheel (34) with its tool-receiving means in alignment with the tool axis.

6. A tool magazine according to any one of claims 3 to 5, **characterized in that** the magazine wheel (34) is arranged with a vertical axis, and the tool holders (50) have a receiving means (54) which opens upwards and into which the tool (56) is capable of being inserted from above and is held in the receiving means (54) by its weight.

7. A tool magazine according to any one of the preceding claims, **characterized in that** the respective positions of the tool holders (50), in which the latter are fixed in the tool magazine (34), are filed in the control means of the machine tool.

## Revendications

1. Magasin d'outils pour une machine-outil comportant des porte-outils (50) installés en une rangée les uns à la suite des autres dans le magasin d'outils et recevant de manière interchangeable les outils (56) dont les axes d'outils sont pratiquement perpendiculaires à la rangée,
* les porte-outils (50) étant réglables en position dans la direction de la rangée dans le magasin d'outils (34) et pouvant être bloqués de manière amovible dans leur position respective,
magasin **caractérisé en ce que**
les porte-outils (50) peuvent être serrés dans leur position respective dans le magasin d'outils (34),
* le magasin d'outils (34) ayant une rainure en T (48) dans la direction de la rangée et dans laquelle pénètrent les porte-outils (50) et dans laquelle les porte-outils (50) sont guidés de manière coulissante et peuvent être serrés.

2. Magasin d'outils selon la revendication 1,
**caractérisé en ce qu'**
- il comporte une roue de magasin (34) de forme circulaire, et
- la rangée des porte-outils (50) est installée dans la direction périphérique de la roue de magasin (34).

3. Magasin d'outils selon la revendication 2,
**caractérisé en ce que**
les porte-outils (50) sont installés en périphérie de la roue de magasin (34) pratiquement parallèlement à son axe et ils reçoivent les outils (56) avec leur axe dirigé radialement.

4. Magasin d'outils selon la revendication 3,
**caractérisé en ce que**
les outils (56) sont logés dans les porte-outils (50) avec leur axe dirigé radialement vers l'intérieur de la roue de magasin (34).

5. Magasin d'outils selon la revendication 4,
**caractérisé en ce que**
une broche d'outils (30) peut être engagée à l'intérieur de la roue de magasin (34) et pour changer d'outil, la broche est mobile dans la roue de magasin (34) avec son logement d'outils, avec l'axe d'outil aligné radialement.

6. Magasin d'outils selon l'une des revendications 3 à 5,
**caractérisé en ce que**
- la roue de magasin (34) est installée avec un axe vertical, et
- le porte-outils (50) comporte un logement (54) ouvert vers le haut et qui reçoit l'outil (56) installé par le haut et tenu par son poids dans le logement (54).

7. Magasin d'outils selon l'une des revendications précédentes,
**caractérisé en ce que**
les positions respectives des porte-outils (50) dans lesquelles ces porte-outils sont fixés dans le magasin d'outils (34) sont enregistrées dans la commande de la machine-outil.
